# EUROPEAN PATENT SPECIFICATION

(11) **EP 2 885 149 B1**
(45) Date of publication and mention of the grant of the patent: **25.05.2016**
(21) Application number: 13751049.1
(22) Date of filing: 13.08.2013
(51) Int. Cl.: B60K 15/04

(54) **GUIDING DEVICE FOR A FUEL FILLER NOZZLE**
FÜHRUNGSVORRICHTUNG FÜR DIE DÜSE EINES KRAFTSTOFFEINFÜLLSTUTZENS
DISPOSITIF DE GUIDAGE POUR UNE BUSE DE REMPLISSAGE EN CARBURANT

(30) Priority: 14.08.2012 DE 102012016084
(43) Date of publication of application: 24.06.2015
(73) Proprietor: Illinois Tool Works Inc., Glenview, IL 60025 (US)
(72) Inventor: KAPAUN, Matthias, 97253 Gaukonigshofen (DE)
(74) Representative: Hauck Patentanwaltspartnerschaft mbB
(86) International application number: PCT/US2013/054744
(87) International publication number: WO 2014/028500

(56) References cited:
- WO-A1-2009/013558
- FR-A3- 2 852 893
- US-A1- 2005 005 998

## Description

The invention relates to a guiding device for a fuel filler nozzle, wherein the guiding device is designed to be inserted into a filler neck of a vehicle tank, and wherein the guiding device comprises fastening means for fastening on an insertion opening of the filler neck provided for insertion of the fuel filler nozzle.

Guiding devices of this type, also called deflectors, serve to guide a fuel filler nozzle which is inserted into the filler neck in order to fill a vehicle tank of an automobile with fuel. In particular, they serve to prevent premature triggering of the switching-off mechanism of the fuel filler nozzle. As a rule, the guiding devices are of tubular design, for example circularly tubular, oval or with a polygonal cross section, and are seated in the filler neck at a spacing from the inner wall of the filler neck. They also serve to prevent what is known as the spit back of fuel. The air which is displaced by fuel which is filled into the vehicle tank can escape through the clearance which is formed between the outer wall of the guiding device and the inner wall of the filler neck.

Filler necks for vehicle tanks are frequently not straight, but rather have a curved or angled course. The curvature serves as a rule to maximize the installation space which is available for the vehicle tank. The course of the filler neck and, in particular, its curvature vary from automobile manufacturer to automobile manufacturer and also from vehicle type to vehicle type. Since the curvature often already begins shortly after the insertion opening of the filler neck, it is necessary that the guiding device which is inserted into the filler neck follows said curvature. The guiding devices therefore have to be of different design depending on the automobile manufacturer and the vehicle type. This results in a large number of different guiding devices, as a result of which the manufacturing outlay in turn is increased considerably.

FR 2 852 893 A3 describes an anti-siphoning device for use in a truck oil tank with a bent filling tube. The device has a tubular oil strainer that is bent to be installed on an oil tank. From US 2005/0005998 A1 a filler device is known comprising a filler neck with a pouring inlet for injecting a fuel and a neck connection portion. A connection pipe including a pipe connection end to which the neck connection portion is connected and a bellows part which is curved along a filling passage to a fuel tank is further provided. The filler device further includes an inner tube including a tube body formed of a flexible elastomer material and inserted into the connection pipe. From WO 2009/013558 A1 a filler neck of a liquid tank to be positioned on a motor vehicle is known incorporating a failsafe means having a geometric and/or functional interface capable of cooperating with a liquid dispensing nozzle having a compatible geometric and/or functional interface.

Proceeding from the described prior art, the invention is based on the object of providing a guiding device of the type mentioned at the outset, in which the manufacturing outlay is lower than in the prior art.

The invention achieves this object by way of the subject matter of claim 1. Advantageous refinements are found in the dependent claims, the description and the figures.

The invention achieves the object by way of a guiding device for a fuel filler nozzle, wherein the guiding device is designed to be inserted into a filler neck of a vehicle tank, and wherein the guiding device comprises fastening means for fastening on an insertion opening of the filler neck provided for insertion of the fuel filler nozzle, wherein the guiding device comprises at least two tubular sections connected with one another, which are movable relative to each other for adaptation to a curvature or an angled or oblique shape of the filler neck.

The guiding device (also called deflector) is inserted in a manner which is known per se into a filler neck (also called filling tube) of a fuel tank of an automobile and is fastened on the insertion opening of the filler neck. In a manner which is known per se, it provides guidance for the fuel filler nozzle which is inserted into the filler neck and prevents premature triggering of the switching-off mechanism. At the same time, a spacing remains as a rule between the outer wall of the guiding device and the inner wall of the filler neck, via which spacing air which is displaced by the introduced fuel can escape to the outside. The guiding device can be composed, for example, of plastic. Manufacturing using an injection molding process is possible.

According to the invention, the guiding device comprises at least two tubular sections. The tubular sections can in principle have any desired cross-sectional shape, for example a circular, oval or polygonal cross section. The tubular sections can be configured in one piece or can be separate sections which are connected to one another in a suitable way, for example in a liquid-tight manner. Manufacturing in a two-component injection molding process is also possible. According to the invention, the tubular sections are movable relative to each other. During the movement of the sections relative to each other, the passage through the two sections for fuel to be introduced is maintained at all times. In particular, a liquid-tight state to the outside can also be maintained here. As a result of the movability of the sections relative to each other, the guiding device according to the invention can be adapted in a flexible way individually to a curvature of the passage through the filler neck, which curvature is provided in a specific filler neck. The guiding device according to the invention can therefore be used in a flexible way in a multiplicity of different filler necks and therefore different vehicle types. Individual production of the guiding device depending on the respective type of filler neck is not necessary. The manufacturing outlay is reduced as a result.

The invention can be used in principle for conventional deflectors, deflectors with a mis-fuel inhibitor (MFI) or capless fuel filling systems (capless systems) with or without MFI.

It can be provided according to one refinement that a first of the at least two tubular sections comprises the fastening means for fastening on the insertion opening of the filler neck, and that a second of the at least two tubular sections comprises a discharge opening for fuel to be filled into the vehicle tank by the fuel filler nozzle. The discharge opening can be arranged in a plane which lies obliquely with respect to the longitudinal axis of the second section. It can also be arranged in a plane which lies perpendicularly with respect to the longitudinal axis of the second section.

According to a further refinement, the first of the at least two tubular sections can have a sufficient length to completely accommodate a filling section of the fuel filler nozzle to be inserted into the filler neck. In this refinement, the fuel filler nozzle therefore does not pass as far as into the second tubular section and therefore does not pass into the region of a directional change of the passage through the guiding device.

The second of the at least two tubular sections comprises at least one flexible spacer on its outer side, to keep the second of the at least two tubular sections distanced from an interior wall of the filler neck. The at least one spacer can be arranged, in particular, at the free end of the second tubular section, at which the discharge opening is also provided. In particular, a plurality of spacers of this type can be provided. The spacers can be, for example, elastic tongues which are arranged, for example, such that they are distributed uniformly over the outer circumference of the second tubular section. The at least one spacer or the spacers ensures/ensure automatic orientation of the guiding device in the filler neck.

According to a further refinement, the at least two tubular sections can be movable between a position in which they are arranged coaxially to each other and several positions in which they are arranged non- coaxially to each other. In particular, they can be tilted relative to each other, optionally also in different tilting directions. It is also possible that they are rotated relative to each other. Stepped or infinitely variable movability between the tubular sections is possible in principle.

The at least two tubular sections are connected to one another by a ball joint. As a result, a rotational movement between the sections in all rotational directions is possible. This results in particularly flexible adaptation to the passage of the filler neck with a particularly large number of degrees of freedom for the movement. In this refinement, in particular in conjunction with the at least one spacer, the guiding device can then be adapted automatically to the respective curvature of the filler neck during insertion into the filler neck, by way of a corresponding movement, for example, of the second tubular section around the joint. Automatic adaptation therefore takes place. As a result, the guiding device can be used in a particularly simple way. The ball joint can be provided with one or more corresponding seals, in order to prevent an outflow of fuel from the ball joint. A refinement without seal is also possible, however.

According to a further refinement, fixing means can be provided with which the at least two tubular sections can be fixed in different relative positions to one another. This refinement is suitable, in particular, for manual presetting of the guiding device for adaptation to a certain filler neck, in particular to a certain curvature of the filler neck. In principle, however, automatic fixing of the guiding device during the insertion into the filler neck is also possible by way of a fixing device of this type. The guiding device can likewise be adapted individually to the respective filler neck, but, in this refinement, is fixed in the respectively set relative position of the at least two sections. The mounting in the filler neck can be facilitated as a result. The fixing can take place in principle in the mounting apparatus or during installation into the filler neck or else already during pre-mounting at a location removed from the installation location.

The fixing means can comprise several tension pulls extending in the longitudinal direction of the guiding device and arranged distributed over the circumference of the at least two tubular sections. In particular, the fixing means can comprise several, for example two or four, tension pulls arranged regularly distributed over the circumference. It can then be provided that the tension pulls are each fixed with one end on an outer wall of one of the at least two tubular sections, wherein the tension pulls each comprise a plurality of locking elements being distanced towards one another in the longitudinal direction, with which locking elements the tension pulls can lock in different longitudinal positions of in each case one locking reception provided on an outer wall of the other of the at least two tubular sections.

The tension pulls function in principle like cable ties. They are fastened with their one end to one of the tubular sections which are movable with respect to each other, for example are connected in one piece to the latter. Suitable locking receptions are provided on the other of the tubular sections which are movable with respect to each other, in which locking receptions the tension pulls lock with their respective other end. To this end, the tension pulls have suitable locking elements which can be formed, for example, by a toothing system. Individual tension pulls can then be effectively shortened in a deliberate manner by pushing the tension pulls into the locking receptions, with the result that the tubular sections which are connected to each other curve in this direction, in adaptation to a curvature of the filler neck. In this way, particularly simple setting of the curvature of the sections and fixing of the tubular sections of the guiding device which are curved in this way can be realized. The locking of the tension pulls in the locking receptions can be releasable. As a result, repeated adaptation of the guiding device is possible.

The invention also relates to a filler neck of an automobile tank, in particular of a passenger vehicle or truck, comprising a guiding device according to the invention fixed therein. The invention also correspondingly relates to a fuel filling system comprising a filler neck of this type with a guiding device according to the invention fixed thereon and, furthermore, a fuel filler nozzle.

Exemplary embodiments of the invention will be explained in greater detail in the following text using drawings, in which, diagrammatically:
- fig. 1: shows an example of a filler neck with a guiding device inserted therein, in a sectional view,
- fig. 2: shows another example of a filler neck with the guiding device from fig. 1 inserted therein, in a sectional view,
- fig. 3: shows a filler neck according to the invention according to a first exemplary embodiment with a guiding device according to the invention inserted therein, in a sectional view, and
- fig. 4: shows a filler neck according to the invention according to a second exemplary embodiment with the guiding device from fig. 3 inserted therein, in a sectional view.

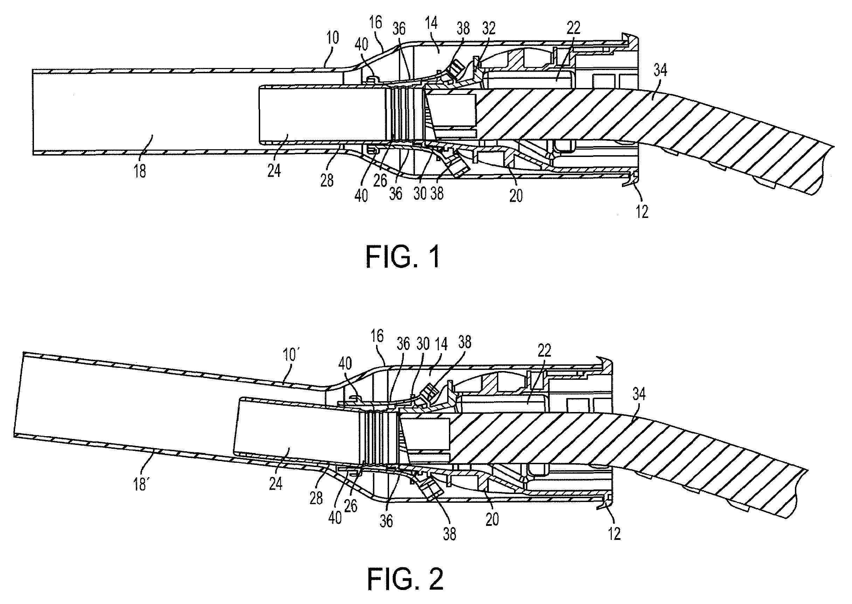

If nothing to the contrary is specified, identical designations denote identical objects in the figures. Fig. 1 shows an example of a filler neck 10. The filler neck 10 has an insertion opening 12 which is adjoined by a straight tubular section 14. The tubular section 14 tapers conically in a tapering region 16 and merges into a thinner straight tubular section 18 which runs coaxially with respect to the tubular section 14. A guiding device 20 is fastened, for example locked, on the insertion opening 12 of the filler neck 10. The guiding device 20 has a first straight tubular section 22 and a second straight tubular section 24 which adjoins the former. The tubular sections 22 and 24 are connected to one another by way of an elastic bellows 26. In the example which is shown, the bellows 26 is composed of an elastic plastic and has been injection molded in a two- component injection molding process onto the wall 28 which delimits the second tubular section 24. Via a locking connection 30, for example, the second tubular section 24 is connected with its wall 28 to the wall 32 which delimits the first tubular section 22. Moreover, a filling section 34 of a fuel filler nozzle which is shown partially in fig. 1 is inserted into the first tubular section 22. It can be seen that the first tubular section 22 has a sufficient length to completely accommodate the filling section 34 of the fuel filler nozzle.

The tubular sections 22, 24 are movable relative to each other via the bellows 26. In fig. 1, the tubular sections 22, 24 are oriented coaxially with respect to each other, in accordance with the coaxial orientation of the tubular sections 14, 18 of the filler neck 10. Here, two tension pulls 36 can be seen in fig. 1, furthermore, which tension pulls 36 are connected with their one end 38, for example integrally, to the wall 32 of the first tubular section 22. In the longitudinal direction thereof, the tension pulls 36 have a toothing system, by way of which they are locked in each case in a locking reception 40 which is provided in the region of their other end on the wall 28 of the second tubular section 24. The two tension pulls 36 which are shown in fig. 1 are attached on the wall 32 of the first tubular section 22 so as to lie opposite each other, for example are connected integrally to said wall 32. Two further tension pulls are provided which are not shown in the sectional illustration in fig. 1. They likewise lie opposite each other and are offset in the circumferential direction in each case by 90° with respect to the tension pulls 36 which are shown. A total of four tension pulls 36 which are distributed uniformly over the circumference of the guiding device are therefore provided.

By way of displacement of individual tension pulls 36 in the locking reception 40 which is assigned in each case to them, the tubular sections 24, 22 of the guiding device 20 can be fixed in a state, in which they are curved with respect to each other, in order to adapt the guiding device 20 to a curvature of the filler neck. This is shown in fig. 2. The filler neck 10' which is shown there differs from the filler neck 10 which is shown in fig. 1 in that the second tubular section 18' runs at an angle with respect to the first tubular section 14. The filler neck 10' therefore has a curvature. For adaptation to said curvature, the upper of the tension pulls 36 in fig. 2 was correspondingly effectively shortened by being pushed further into the locking reception 40, with the result that a corresponding curvature of the guiding device 20 is achieved and fixed via the bellows 26, in particular tilting of the second tubular section 24 with respect to the first tubular section 22.

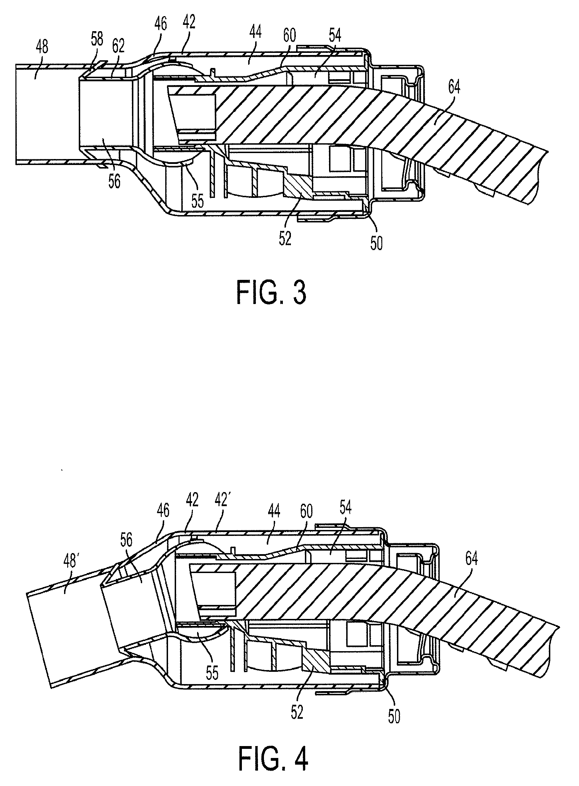

Fig. 3 shows a filler neck 42 according to a first exemplary embodiment of the invention. The filler neck 42 has a first straight tubular section 44 which continues in a tapering region 46 into a thinner second straight tubular section 48. In fig. 3, the longitudinal directions of the first tubular section 44 and of the second tubular section 48 lie parallel to one another. A guiding device 52 according to the invention is fastened on an insertion opening 50 of the filler neck 42. The guiding device 52 has a first straight tubular section 54 which is connected via a ball joint 55 to a second straight tubular section 56. At the free end of the second tubular section 56, a plurality of spacers 58 in the form of elastic tongues are shown diagrammatically on its outer wall. The spacers 58 can be distributed, for example, uniformly over the circumference of the outer wall of the second tubular section 56. The tubular sections 54, 56 and, in particular, their walls 60, 62 are connected to one another in a liquid-tight manner via the ball joint 55.

Moreover, a filling section of a fuel filler nozzle which is inserted into the filler neck 42 can be seen at the designation 64 in fig. 3. It can be seen once again that the first tubular section 54 has a sufficient length to completely accommodate the filling section 64 of the fuel filler nozzle. Via the ball joint 55, the second tubular section 56 of the guiding device 52 can be rotated in any desired directions relative to the first tubular section 54 of the guiding device 52. Here, the spacers 58 firstly bring about a sufficient spacing between the outer wall 62 of the second tubular section 56 and the inner wall of the second tubular section 56 of the filler neck 42. Secondly, the spacers 58 lead to self-centering, in particular of the second tubular section 56 of the guiding device 52 in the filler neck 42. In the exemplary embodiment which is shown in fig. 3, the second tubular section 56 of the guiding device 52 is oriented coaxially with respect to the first tubular section 54, in accordance with the shape of the filler neck 42.

Fig. 4 shows another exemplary embodiment of a filler neck 42'. This corresponds largely to the filler neck from fig. 3. In contrast to the filler neck 42 from fig. 3, however, the second tubular section 48' is curved in comparison with the first tubular section 44 in the filler neck 42' from fig. 4, in particular the longitudinal directions of the second tubular section 48' and the first tubular section 44 run at an angle with respect to each other. In adaptation to this curvature of the filler neck 42', the second tubular section 56 of the guiding device 52 has rotated automatically about the ball joint 55 with respect to the first tubular section 54, as can be seen in fig. 4.

The filler necks 10, 10', 42, 42' which are shown in the figures are installed in a manner which is known per se into the inlet of a fuel tank of an automobile. Here, the guiding devices 20, 52 can be used flexibly in each case in filler necks of different shape, without it being necessary for an individual guiding device to be manufactured for each of the filler necks.

## Claims

1. Guiding device for a fuel filler nozzle wherein the guiding device (20, 52) is designed to be inserted into a filler neck (10, 10', 42, 42') of a vehicle tank, and wherein the guiding device (20, 52) comprises fastening means for fastening on an insertion opening (12) of the filler neck (10, 10', 42, 42') provided for insertion of the fuel filler nozzle, wherein the guiding device (20, 52) comprises at least two tubular sections (22, 24, 54, 56) connected with one another, which are moveable relative to each other for adaption to a curvature or an angled shape of the filler neck (10, 10', 42, 42'), **characterized in that** the second of the at least two tubular sections (22, 24, 54, 56) comprises at least one flexible spacer (58) on its outer side, to keep the second of the at least two tubular sections (22, 24, 54, 56) distanced from an interior wall of the filler neck (10, 10', 42, 42'), and **in that** the at least two tubular sections (22, 24, 54, 56) are connected to one another by a ball joint.

2. Guiding device according to claim 1, **characterized in that** a first of the at least two tubular sections (22, 24, 54, 56) comprises the fastening means for fastening on the insertion opening (12) of the filler neck (10, 10', 42, 42'), and **in that** a second of the at least two tubular sections (22, 24, 54, 56) comprises a discharge opening for fuel to be filled into the vehicle tank by the fuel filler nozzle.

3. Guiding device according to claim 2, **characterized in that** the first of the at least two tubular sections (22, 24, 54, 56) has a sufficient length to completely accommodate a filling section (34) of the fuel filler nozzle to be inserted into the filler neck (10, 10', 42, 42').

4. Guiding device according to one of the preceding claims, **characterized in that** the at least two tubular sections (22, 24, 54, 56) are moveable between a position in which they are arranged coaxially to each other and several positions in which they are arranged non-coaxially to each other.

5. Guiding device according to one of the preceding claims, **characterized in that** fixing means are provided with which the at least two tubular sections (22, 24, 54, 56) can be fixed in different relative positions to one another.

6. Guiding device according to claim 5, **characterized in that** the fixing means comprise several tension pulls (36) extending in the longitudinal direction of the guiding device (20, 52) and arranged distributed over the circumference of the at least two tubular sections (22, 24,54,56).

7. Guiding device according to claim 6 **characterized in that** the fixing means comprise several, in particular four, tension pulls (36) arranged regularly distributed over the circumference.

8. Guiding device according to claim 6, **characterized in that** the tension pulls (36) are each fixed with one end on an outer wall of one of the at least two tubular sections (22, 24, 54, 56), and wherein the tension pulls (36) each comprise a plurality of locking elements being distanced towards one another in the longitudinal direction, with which locking elements the tension pulls can lock in different longitudinal positions on in each case one locking reception (40) provided on an outer wall of the other of the at least two tubular sections (22, 24,54,56).

9. Filler neck of an automobile tank, comprising a guiding device according to one of the preceding claims fixed therein.

## Patentansprüche

1. Führungseinrichtung für eine Kraftstoffzapfpistole, wobei die Führungseinrichtung (20, 52) dazu ausgebildet ist, in einen Einfüllstutzen (10, 10', 42, 42') eines Fahrzeugtanks eingesetzt zu werden, und wobei die Führungseinrichtung (20, 52) Befestigungsmittel zur Befestigung an einer zum Einführen der Kraftstoffzapfpistole vorgesehenen Einführöffnung (12) des Einfüllstutzens (10, 10', 42, 42') aufweist, **dadurch gekennzeichnet, dass** die Führungseinrichtung (20, 52) mindestens zwei miteinander verbundene rohrförmige Abschnitte (22, 24, 54, 56) aufweist, die relativ zueinander bewegbar sind zur Anpassung an eine Krümmung oder einen winkeligen Verlauf des Einfüllstutzens (10, 10', 42, 42'), **dadurch gekennzeichnet, dass** der zweite der mindestens zwei rohrförmigen Abschnitte (22, 24, 54, 56) an seiner Außenseite mindestens einen flexiblen Abstandhalter (58) aufweist, um den zweiten der mindestens zwei rohrförmigen Abschnitte (22, 24, 54, 56) beabstandet von einer Innenwand des Einfüllstutzens (10, 10', 42, 42') zu halten, und dass die mindestens zwei rohrförmigen Abschnitte (22, 24, 54, 56) durch ein Kugelgelenk miteinander verbunden sind.

2. Führungseinrichtung nach Anspruch 1, **dadurch gekennzeichnet, dass** ein erster der mindestens zwei rohrförmigen Abschnitte (22, 24, 54, 56) die Befestigungsmittel zur Befestigung an der Einführöffnung (12) des Einfüllstutzens (10, 10', 42, 42') aufweist, und dass ein zweiter der mindestens zwei rohrförmigen Abschnitte (22, 24, 54, 56) eine Auslassöffnung für durch die Kraftstoffzapfpistole in den Fahrzeugtank zu füllenden Kraftstoff aufweist.

3. Führungseinrichtung nach Anspruch 2, **dadurch gekennzeichnet, dass** der erste der mindestens zwei rohrförmigen Abschnitte (22, 24, 54, 56) eine ausreichende Länge besitzt, um einen in den Einfüllstutzen (10, 10', 42, 42') einzuführenden Befüllabschnitt (34) der Kraftstoffzapfpistole vollständig aufzunehmen.

4. Führungseinrichtung nach einem der vorhergehenden Ansprüche, **dadurch gekennzeichnet, dass** die mindestens zwei rohrförmigen Abschnitte (22, 24, 54, 56) zwischen einer Stellung, in der sie koaxial zueinander angeordnet sind, und mehreren Stellungen, in denen sie nicht koaxial zueinander angeordnet sind, bewegbar sind.

5. Führungseinrichtung nach einem der vorhergehenden Ansprüche, **dadurch gekennzeichnet, dass** Fixiermittel vorgesehen sind, mit denen die mindestens zwei rohrförmigen Abschnitte (22, 24, 54, 56) in unterschiedlichen relativen Stellungen zueinander fixiert werden können.

6. Führungseinrichtung nach Anspruch 5, **dadurch gekennzeichnet, dass** die Fixiermittel mehrere in Längsrichtung der Führungseinrichtung (20, 52) verlaufende und über den Umfang der mindestens zwei rohrförmigen Abschnitte (22, 24, 54, 56) verteilt angeordnete Spannzüge (36) aufweisen.

7. Führungseinrichtung nach Anspruch 6, **dadurch gekennzeichnet, dass** die Fixiermittel mehrere, insbesondere vier gleichmäßig über den Umfang verteilt angeordnete Spannzüge (36) aufweisen.

8. Führungseinrichtung nach Anspruch 6, **dadurch gekennzeichnet, dass** die Spannzüge (36) jeweils mit einem Ende an einer Außenwand eines der mindestens zwei rohrförmigen Abschnitte (22, 24, 54, 56) befestigt sind, und wobei die Spannzüge (36) in Längsrichtung jeweils eine Mehrzahl von zueinander beabstandeten Rastelementen aufweisen, mit denen sie in unterschiedlichen Längspositionen an jeweils einer an einer Außenwand des anderen der mindestens zwei rohrförmigen Abschnitte (22, 24, 54, 56) vorgesehenen Rastaufnahme (40) verrasten können.

9. Einfüllstutzen eines Fahrzeugtanks, umfassend eine darin befestigte Führungseinrichtung nach einem der vorhergehenden Ansprüche.

## Revendications

1. Dispositif de guidage pour un pistolet de remplissage de carburant, dans lequel le dispositif de guidage (20, 52) est conçu pour être inséré dans le goulot de remplissage (10, 10', 42, 42') d'un réservoir de véhicule, et dans lequel le dispositif de guidage (20, 52) comprend un moyen de fixation à fixer sur une ouverture d'introduction (12) du goulot de remplissage (10, 10', 42, 42') prévue pour l'introduction du pistolet de remplissage de carburant, dans lequel le dispositif de guidage (20, 52) comprend au moins deux sections tubulaires (22, 24, 54, 56) raccordées l'une à l'autre, qui sont mobiles l'une par rapport à l'autre pour s'adapter à une courbe ou une forme coudée du goulot de remplissage (10, 10', 42, 42'), **caractérisé en ce que** la seconde desdites sections tubulaires (22, 24, 54, 56) comprend au moins une entretoise (58) flexible sur sa face extérieure, pour maintenir la seconde desdites sections tubulaires (22, 24, 54, 56) à distance de la paroi intérieure du goulot de remplissage (10, 10', 42, 42'), et **en ce que** lesdites sections tubulaires (22, 24, 54, 56) sont raccordées l'une à l'autre par un joint à rotule.

2. Dispositif de guidage selon la revendication 1, **caractérisé en ce que** la première desdites sections tubulaires (22, 24, 54, 56) comprend le moyen de fixation à fixer sur l'ouverture d'introduction (12) du goulot de remplissage (10, 10', 42, 42'), et **en ce que** la seconde desdites sections tubulaires (22, 24, 54, 56) comprend un orifice d'évacuation pour le carburant à déverser dans le réservoir du véhicule par le pistolet de remplissage de carburant.

3. Dispositif de guidage selon la revendication 2, **caractérisé en ce que** la première desdites sections tubulaires (22, 24, 54, 56) présente une longueur suffisante pour recevoir en entier la section (34) de remplissage du pistolet de remplissage de carburant à introduire dans le goulot de remplissage (10, 10', 42, 42').

4. Dispositif de guidage selon l'une quelconque des revendications précédentes, **caractérisé en ce que** lesdites sections tubulaires (22, 24, 54, 56) sont mobiles entre une position dans laquelle elles sont disposées coaxialement l'une avec l'autre et plusieurs positions dans lesquelles elles sont disposées non coaxialement l'une par rapport à l'autre.

5. Dispositif de guidage selon l'une quelconque des revendications précédentes, **caractérisé en ce que** l'on fait appel à des moyens de fixation avec lesquels lesdites sections tubulaires (22, 24, 54, 56) peuvent être fixées dans différentes positions l'une par rapport à l'autre.

6. Dispositif de guidage selon la revendication 5, **caractérisé en ce que** les moyens de fixation comprennent plusieurs sangles de tension (36) s'étendant dans le sens longitudinal du dispositif de guidage (20, 52) et disposées réparties sur la circonférence desdites sections tubulaires (22, 24, 54, 56).

7. Dispositif de guidage selon la revendication 6, **caractérisé en ce que** les moyens de fixation comprennent plusieurs, en particulier quatre, sangles de tension (36) disposées réparties sur la circonférence.

8. Dispositif de guidage selon la revendication 6, **caractérisé en ce que** les sangles de tension (36) sont chacune fixées avec une extrémité sur la paroi extérieure d'une desdites sections tubulaires (22, 24, 54, 56), et dans lequel les sangles de tension (36) comprennent chacune une pluralité d'éléments de blocage qui sont à distance l'un de l'autre dans le sens longitudinal et avec lesquels les sangles de tension peuvent se bloquer dans différentes positions longitudinales sur, dans chaque cas, une encoche de fixation (40) disposée sur la paroi extérieure de l'autre desdites sections tubulaires (22, 24, 54, 56).

9. Goulot de remplissage d'un réservoir d'automobile, comprenant un dispositif de guidage selon l'une quelconque des revendications précédentes fixées dans le présent document.
